# EUROPEAN PATENT APPLICATION

(11) **EP 4 550 271 A1**
(43) Date of publication of application: **07.05.2025**
(21) Application number: 23207766.9
(22) Date of filing: 03.11.2023
(51) Int. Cl.: G06T 17/05, G06T 19/00

(54) **COMPUTER-IMPLEMENTED METHOD FOR PROCESSING A MULTI-DIMENSIONAL SPATIAL DATA REPRESENTATION**

(71) Applicant: Helsing GmbH, 81671 Munich (DE)
(72) Inventor: GOKMEN, Edward, 81671 Munich (DE)
(74) Representative: Rummler, Felix

(57) **Abstract**

The invention relates to a computer-implemented method (100) for processing a multi-dimensional spatial data representation (1), particularly for placing objects on a two-dimensional landscape image, more particularly for creating a three-dimensional virtual space, the method (100) comprising:
- Providing the multi-dimensional spatial data representation (1),
- Applying a space filling curve (2) on the data representation (1) to process (8) a subsection (3) of the data representation (1) in discrete steps (4) along the space filling curve (2).

## Description

### Technical Field

The present disclosure relates to systems, methods, and computer program products for a computer-implemented method for processing a multi-dimensional spatial data representation.

### Background

For creating a virtual environment, like a virtual space, a multi-dimensional spatial data representation (also called source environment) is used as origin. Such multi-dimensional spatial data representation may be a two-dimensional (2D) data representation, particularly a 2D image, or three-dimensional (3D) data representation, particularly a 3D spatial model. In certain cases the multi-dimensional spatial data representation can be a satellite image and/or it is derived from satellite imagery.

However, such original multi-dimensional spatial data representation may lack a certain information, which does not allow the creation of an applicable target environment from this source environment.

On the other hand, such original multi-dimensional spatial data representation may also include additional information, which may be ineligible for creating an applicable target environment from this source environment. That means, the multi-dimensional spatial data representation may also have an improper original dimension for creating an applicable target environment.

Thus, there exists a need for being able to modify a multi-dimensional spatial data representation to convert them in an applicable target environment.

### Summary

A solution for this problem is provided by the computer-implemented method according to claim 1.

In particular, a computer-implemented method for processing a multi-dimensional spatial data representation is proposed. This method may particularly be used for placing three-dimensional objects on a two-dimensional landscape image, more particularly for creating a three-dimensional virtual space. However, this is not the only application of this method as it will be described later.

The method comprising:
- Providing the multi-dimensional spatial data representation (also called source dimension),
- Applying a space filling curve on the data representation to process a subsection of the data representation in discrete steps along the space filling curve.

The general idea is to take as a source a multi-dimensional spatial data representation, e.g. a lower dimensional representation of some space (like a 2D set of satellite imagery representing a 3D world), and using any space filling curve (like a Hilbert curve), to sample the lower dimensional space, in order to gain or reduce information about a target dimensional spatial data representation, e.g. a higher dimensional representation of said space. That means the invention can be used to add or remove information from the source multi-dimensional spatial data representation to create a target multi-dimensional spatial data representation including such information. In other words, it can be either used to sample a lower order space using a space filling curve to construct a higher order space or to sample a higher order space using a space filling curve to construct a lower order space.

The computer-implemented method according to the invention thus may be used to create a (N+1)-dimensional or (N-1)-dimensional spatial data representation (target spatial representation) from a N-dimensional spatial data representation (source spatial representation). The method can preferably be used to create a three-dimensional photorealistic space from a two-dimensional image, like a satellite image.

Because of the locality properties of space filling curves (they map points close to each other in a lower dimension, to points close to each other in a higher dimension, or vice versa), by stepping along one dimension, sampling the space, and adapting a set of probabilities associated with some effect in the other dimension.

By using this method, it is possible to approximate a target space, in a target dimension, if a source space which encodes some information regarding the target space is available.

An advantage can be that it can be faster, and more memory efficient, to sample the source multi-dimensional spatial data representation (e.g. satellite imagery), than the target multi-dimensional spatial data representation (3D terrain data). Operating in a higher dimensional space requires a sampling function, which must also be able to operate in said higher dimension. The space filling curve approach requires a smaller cache (constant space usage for each processing action, like object placement), and takes constant time to execute each step. Furthermore, the execution time of the method does not scale with the desired distance to different positions, unlike other known methods.

The space filling curve may be a multi-dimensional curve. The curve may have the same dimensional order than the multi-dimensional spatial data representation to be processed. The space filling curve may be a Hilbert curve, more particularly a Hilbert curve having at least a third order. The space filling curve can be used to map one dimensional space onto N dimensions, while ensuring that points close to each other in one dimension, are close to each other in the target space; it enables to fulfil the requirements in two dimensions, if it can be fulfilled in one dimension.

The subsection may comprise one or more data points. The data points may be or may comprise an image pixel or group of pixels. The size of the subsection may be predefined and/or adjustable. The current subsection to be processed may further be defined by the position on the space filling curve.

Each step along the space filling curve may define a new position within the multi-dimensional spatial data representation. That means a position may refer to a unique position within a coordinate system which includes all positions of the data representation. The space filing curve may extend within the multi-dimensional spatial data representation without crossing itself. That means that by stepping along the space filing curve each position of the multi-dimensional spatial data representation may be reached only once. Therefore, the processing of the multi-dimensional spatial data representation can be performed in the fastest possible way.

During the processing of the subsection of the data representation an analysis of the content of the subsection may be executed. The analysis of the content will be further described in the following. Content may refer to a landmark, in particular to a landmark type. The analysis can be executed by analysing the colour and/or shape of a content found in said subsection. In addition, or alternatively during the processing of the subsection of the data representation an alteration of the content of the subsection may be executed. Such alteration may be a data augmentation of the subsection. E.g. the colour of a pixel or a group of pixels in said subsection is changed to another colour. Further, in the processing step of the subsection of the data representation at least an object, particularly a three-dimensional object, may be placed on the subsection of the data representation. The processing action depends on the result of the analysis and may be predefined. In particular, the result of the analysis may be one input value to determine which processing action is executed.

At each step, processing the subsection of the data representation may be dependent on the respective position within the data representation and/or the space filling curve. That means that said position can be also used as an input value to determine which processing action is executed. In some cases it may also be used as the only input value.

Particularly, at each step a probability value for processing the subsection of the data representation may be determined and the processing action may depend on said probability value. The probability value may be determined by using one or more input values, as described herein. That means that the probability value may depend on the position within the data representation and/or the space filling curve and/or it may depend on a probability value determined in a previous step along the space filling curve.

Further, the density of objects and/or the density of a content, particularly the density of objects and/or content of a similar and/or different type, in a position and/or a subsection of the multi-dimensional spatial data representation may be used as an input value and/or as input values to process the subsection of the data representation. In particular, it may be used to determine a probability value for processing the subsection of the data representation, as described before, like determining a particular processing action. The probability value may be used for the decision whether an object may be placed in said position and/or said subsection of the multi-dimensional spatial data representation and/or whether an alteration of the content is performed. In particular, it may be used to decide whether an object of a similar and/or different object type, in said position and/or said subsection and/or in an adjacent position and/or adjacent subsection of said position and/or said subsection of the multi-dimensional spatial data representation may be placed.

The presence and/or absence of an object and/or a content in a position and/or a subsection of the multi-dimensional spatial data representation, particularly the presence and/or absence of an object and/or content of a similar and/or different type in said position and/or said subsection of the multi-dimensional spatial data representation, may be used as an input value and/or as input values to process the multi-dimensional spatial data representation. As described before this may lead to different processing actions. In particular, it may be used to determine the probability value for placing an object in said position and/or said subsection of the multi-dimensional spatial data representation and/or in an adjacent position and/or an alteration of a content. More particularly it may be used to determine the probability value for placing an object of the same and/or of a different object type.

With respect to a position and/or a subsection of the multi-dimensional spatial data representation, a distance to a content of the multi-dimensional spatial data representation and/or a distance between objects on the multi-dimensional spatial data representation and/or the space filling curve may be used as an input value and/or as input values to process the multi-dimensional spatial data representation. Particularly, the distance between objects of the of the same and/or of a different object type may be used as input value.

The content of the multi-dimensional spatial data representation in the subsection may be analysed before any object is placed on the multi-dimensional spatial data representation, wherein the content of the multi-dimensional spatial data representation in a position and/or in adjacent positions may be used as an input value and/or as input values to determine the probability value for processing the spatial data representation. In particular, it may be used for determining whether an object is placed in said position. More particularly, it may be used to determine the probability value for placing an object of the same and/or of a different object type.

In order to better exclude a flawed alteration of the content of the subsection and or placement of objects, coherence requirements for objects and/or content, particularly for the same and/or of a different type, of the multi-dimensional spatial data representation may be predefined, wherein a coherence test is carried out to verify compliance with the coherence requirements, in which the content of the multi-dimensional spatial data representation in a position and/or in adjacent positions is analysed for landmarks, wherein in the case of the presence of a landmark, particularly a landmark of a definite landmark type, in said position and/or in an adjacent position, a check is performed as to whether an object placement and/or a content alteration may be executed on the position of said landmark and/or on a position in the vicinity of said landmark. Particularly, wherein the result of this check may be used as an input value to determine the probability value for processing the subsection of the data representation. It may be used as an input factor for the decision whether an object is placed in said position on the curve and/or multi-dimensional spatial data representation, particularly to determine the probability value for placing an object of the same and/or of a different object type and/or an alteration of content.

Different object types may be placed on the multi-dimensional spatial data representation, particularly in the same step of the space filling curve, wherein for each object type an individual probability value for placing an object of said object type in a position on the multi-dimensional spatial data representation may be determined. At each step of the space filling curve such a processing step may be executed. The different probability values for each object type at each position of the multi-dimensional spatial data representation may be pooled in a probability vector. That means that in each step along the curve each value of the probability vector may again be determined, particularly by using the input factors as described herein. Different processing actions of one subsection, like object placement and content alteration, may be performed in the same step of the space filling curve.

Before processing the multi-dimensional spatial data representation, the multi-dimensional spatial data representation may be divided into a number of segments, wherein the processing in one segment may be completed before a processing of the multi-dimensional spatial data representation is started in another segment. A processing sequence by applying the space filling curve may be determined by a second space filling curve. Said second space filling curve may have a lower order than the space filling curve used for processing the multi-dimensional spatial data representation. Each segment may have the same size, wherein the size of the segments is determined by the order of the second space filling curve.

A width of each step of the space filling curve may be adaptable. This allows to increase the variability and flexibility of processing the source multi-dimensional spatial data representation.

Another aspect of the invention refers to a system comprising one or more processors and one or more storage devices, wherein the system is configured to perform the computer-implemented method as described and/or claimed herein.

Yet another aspect of the invention refers to a computer program product for loading into a memory of a computer, comprising instructions, that, when executed by a processor of the computer, cause the computer to execute a computer-implemented method as described and/or claimed herein.

A further aspect of the invention relates to a computer program product comprising a trained machine learning module obtainable by the computer-implemented method as described and/or claimed herein.

### Brief description of the drawings

The features, objects, and advantages of the present disclosure will become more apparent from the detailed description set forth below when taken in conjunction with the drawings in which like reference numerals refer to similar elements.

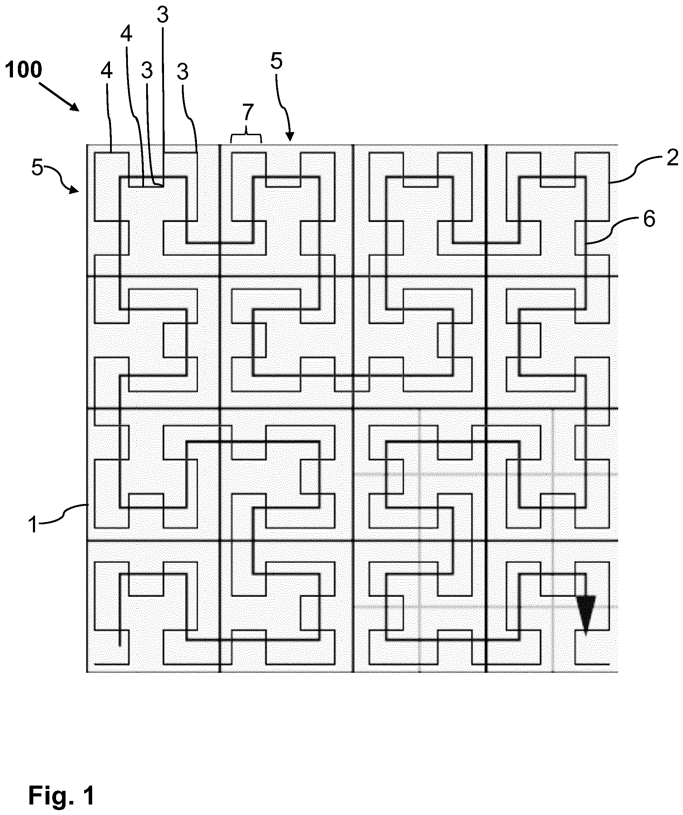

- Fig. 1 shows a two-dimensional spatial data representation, which is segmented into sixteen segments by using a second space filling curve having a lower order than the first space filling curve to process the two-dimensional spatial data representation, wherein in each step along the first space filling curve, at least one probability value for processing the subsection of the data representation, wherein with each step along the curve anew position on the two-dimensional spatial data representation is reached and a new subsection of the two-dimensional spatial data representation is defined,

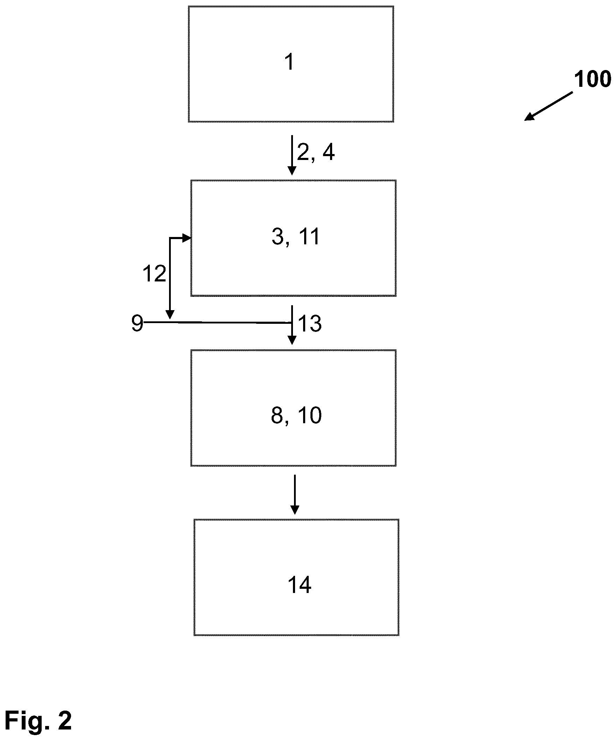

- Fig. 2 shows a schematic representation of the method for processing a multi-dimensional spatial data representation.

### Detailed description of the preferred embodiments

Figure 1 shows the processing of a two-dimensional spatial data representation 1 by using a computer-implemented method 100 according to the invention. Figure 2 shows the steps of the method in a schematic diagram.

As first space filling curve 2 and second space filling curve 6 a Hilbert curve is used to map one dimensional space onto N dimensions, while ensuring that points close to each other in one dimension, are close to each other in the target space.

The method 100 may be used to create three-dimensional virtual space. In general, the method 100 may be used to create a target space (target N-dimensional spatial data representation 14) from a source space, which can be the two- or any multi-dimensional spatial data representation 1. As source multi-dimensional spatial data representation 1 a two-dimensional satellite image may be used. If the target multi-dimensional spatial data representation 14 has more dimensions than the source multi-dimensional spatial data representation 1 it is faster, and more memory efficient, to sample the source space 1 (e.g. satellite imagery), than the target space 14 (e.g. 3D terrain data). The method 100 comprises the steps:
- Providing the multi-dimensional spatial data representation 1,
- Applying a (first) space filling curve 2 on the data representation 1 to process 8 a subsection 3 of the data representation 1 in discrete steps 4 along the space filling curve 2.

In each step along the curve 2 the processing action 10 may be determined and/or the processing action 10 may be predetermined.

During the processing 8 of the subsection 3 of the data representation 1 an analysis of the content of the subsection 3 may also be executed.

An alteration of the content of the subsection 3 may be executed in the processing 8, wherein the respective processing action 10 may depend on the analysis result and/or the position 11 on the data representation 1 and/or a previous step 4 along the curve 2. The processing action 10 may refer to a data augmentation of the subsection 3. In particular, in the processing step 8 of the subsection 3 of the data representation 1 at least one object may be placed on the subsection 3 in said position 11 of the step 4 along the curve 2. Examples of alterations of the subsections 3 will be described in the following in detail.

In pursuit of better results, objects, in particular three-dimensional objects, have to be generated procedurally (or more generally to generate a plurality of different objects, like trees, houses, foliage, etc.). There are multiple considerations when doing so, like:
A) asset density (particular objects shouldn't be too close to other objects, e.g. trees shouldn't be too close together and/or nor too far apart)
B) asset plurality (support the placing of multiple, in particular multiple different objects/assets)
C) object-content-imagery coherence (e.g. don't place a tree in the middle of a motorway)
D) object-content-coherence at image segment boundaries (e.g. a forest by a beach will likely also have some sand on the ground).

This can be achieved by the following steps:
Step along the (first) space filling curve 2 in discrete steps 4 which are some fractions of the desired distance between objects/assets. The width of each step 4 is arbitrary.

At each step 4 along the curve 2, a processing action 10, particularly placing the asset/object with respect to a probability value 9 is executed. The probability value 9 can depend on different input values 12 (e.g. as already described before). In that way, a pseudo-random distribution of the objects on the curve 2 and on the multi-dimensional spatial data representation 1 is achieved. Like this a target multi-dimensional spatial data representation 14 may be created.

The object density can be controlled by adapting the probability value 9, whereas the minimal distance between objects will never be smaller than the discrete step 4 defined. Preferably, if the object was placed on the curve 2 according to the probability value 9, the probability value 9 is reduced for the next step 4 along the curve 2. If, in the next step 4, the object was not placed on the curve 2, the probability value 9 can be increased for the next step 4. The probability value 9 should be set and/or modified such that the expected frequency of objects/assets is equal to the object/asset density given a regular placement with the desired distance between objects/assets.

The above procedure can be extended to spawn N objects/assets by maintaining a vector of N probability values 9. In order to maintain some sense of desired distance between objects/assets, the success of spawning an object/asset should, in the next step 4, reduce the chance of spawning objects/assets with a high desired distance to the successfully spawned object/asset. That is, the entries of the probability value 9 may individually change based on the object/asset placed in the previous step 4 (particularly on the previous location on the curve 2) and/or the content of the data representation 1. E.g. the probability of placing a house directly next to a tree (or a palm next to an iceberg) should be minimal (particularly, be zero), the probability of placing a blade of grass next to another should be relatively high.

It is possible to support object/asset-imagery coherence by segmenting the source multi-dimensional spatial data representation 1 (e.g. an aerial imagery), and using the segment 5 currently spawning on to decide how the probability value 9 is changed between the steps 4. In that way, the position 11 on the data representation 1 on which the objects/assets are placed is taken into account when defining the entries of the N-dimensional probability value 9.

Changing the distribution of objects at segment 5 boundaries is also straightforward. It is possible to take a 2D point we are mapping onto and sample its surroundings to find nearby subsection 3. We can then blend the spawning policy functions of each subsection 3 to achieve the desired processing action 10. In that way, the surrounding subsections 3 of the current subsection 3 of the data representation 1 on which the objects/assets are placed is/are taken into account when defining the entries of the N-dimensional probability value 9.

A segmentation of the data representation 1 can be achieved by using a lower order second space filling curve 6 to iterate over tiles at a desired zoom level in a tile matrix set (TMS), and then using a higher order version of the same curve 2 to access individual pixels within the tiles of the image (note that one curve is used to access every single pixel in the zoom level). Under this scheme, it is also possible to achieve subpixel object/asset density by using a higher order space filling curve 2 to place the objects/assets.

In that way, the ordering in which the subsections 3 (e.g. image tiles) are processed is defined by stepping along the lower order curve 6. The placing of the objects/assets within each image tile is performed along the higher order curves 2. The higher order curves 2 within adjacent image tiles are linked such that the probability values 9 associated with the first iteration on the curve 2 within a subsequent tile depends on the probability values 9 of last iteration on the curve 2 within a previous tile (wherein the determination of "subsequent" and "previous" is based on the lower order curve 6).

Once a set of objects is generated, the co-ordinate reference system associated with the tile matrix set (containing the imagery) can be used to convert the (sub-)pixel positions to longitude, latitude pairs.

The processing action 10 may thus be one or more selected from: no analysis, analysis of the content of the multi-dimensional spatial data representation 1, no alteration, placement of one or more objects, in particular objects of different object types and/or alteration of the content of the multi-dimensional spatial data representation 1.

### Reference signs

- 100: Method for processing a multi-dimensional spatial data representation
- 1: Multi-dimensional spatial data representation (source)
- 2: Space filling curve
- 3: Subsection
- 4: Step
- 5: Segment
- 6: Second space filling curve
- 7: Width
- 8: Process the subsection
- 9: Probability value
- 10: Processing action
- 11: Position
- 12: Input-Value
- 13: Coherence test
- 14: Target multi-dimensional spatial data representation

## Claims

1. A computer-implemented method (100) for processing a multi-dimensional spatial data representation (1), particularly for placing objects on a two-dimensional landscape image, more particularly for creating a three-dimensional virtual space, the method (100) comprising:
- Providing the multi-dimensional spatial data representation (1),
- Applying a space filling curve (2) on the data representation (1) to process (8) a subsection (3) of the data representation (1) in discrete steps (4) along the space filling curve (2).

2. Method (100) of claim 1, wherein during the processing (8) of the subsection (3) of the data representation (1) an analysis of the content of the subsection (3) is executed and/or an alteration of the content of the subsection (3) is executed, particularly a data augmentation of the subsection is executed, more particular wherein in the processing step of the subsection (3) of the data representation (1) at least one object is placed on the subsection (3).

3. Method (100) of any of the preceding claims, wherein at each step (4), processing (8) the subsection (3) of the data representation (1) is dependent on the respective position (11) within the data representation (1) and/or the space filling curve (2).

4. Method (100) of any of the preceding claims, wherein at each step (4) a probability value (9) for processing the subsection (3) of the data representation (1) is determined and the processing action (10) depends on said probability value (9).

5. Method (100) of any of the preceding claims, wherein the density of objects and/or content in a position and/or a subsection (3) of the multi-dimensional spatial data representation (1) is used as an input value (12) and/or as input values (12) to process (8) the subsection (3) of the data representation (1), in particular to determine a probability value (9) for processing (8) the subsection (3) of the data representation (1).

6. Method (100) of any of the preceding claims, wherein the presence and/or absence of a an object and/or content in a position (11) and/or subsection (3) of the multi-dimensional spatial data representation (1) is used as an input value (12) and/or as input values (12) to process (8) the multi-dimensional spatial data representation (1), in particular to determine the probability value (9) for placing an object in an adjacent position.

7. Method (100) of any of the preceding claims, wherein a distance to a content of the multi-dimensional spatial data representation (1) and/or a distance between objects on the multi-dimensional spatial data representation (1) and/or the space filling curve (2) is used as an input value (12) and/or as input values (12) to process (8) the multi-dimensional spatial data representation (1).

8. Method (100) of any of the preceding claims, wherein the content of the multi-dimensional spatial data representation (1) in the subsection (3) is analysed before any object is placed on the multi-dimensional spatial data representation (1), wherein the content of the multi-dimensional spatial data representation (1) in a position (11) and/or in adjacent positions is used as an input value (12) and/or as input values (12) to determine the probability value (9) for processing (8) the spatial data representation (1).

9. Method (100) of any of the preceding claims, wherein coherence requirements for objects and/or content of the multi-dimensional spatial data representation (1) are predefined, wherein a coherence test (13) is carried out to verify compliance with the coherence requirements, in which the content of the multi-dimensional spatial data representation (1) in a position (11) and/or in adjacent positions is analysed for landmarks, wherein in the case of the presence of a landmark in said position (11) and/or in an adjacent position, a check is performed as to whether an object placement and/or a content alteration may be executed on the position (11) of said landmark and/or on a position in the vicinity of said landmark, particularly wherein the result of this check is used as an input value (12) to determine the probability value (9) for processing (8) the subsection (3) of the data representation (1).

10. Method (100) of any of the preceding claims, wherein different object types are placed on the multi-dimensional spatial data representation (1), particularly in the same step of the space filling curve (2), wherein for each object type an individual probability value (9) for placing an object of said object type in a position (11) on the multi-dimensional spatial data representation (1) is determined.

11. Method (100) of any of the preceding claims, wherein before processing (8) the multi-dimensional spatial data representation (1), the multi-dimensional spatial data representation (1) is divided into a number of segments (5), wherein the processing (8) in one segment (5) is completed before a processing (8) of the multi-dimensional spatial data representation (1) in another segment (5) is started, particularly wherein the processing sequence by applying the space filling curve (2) is determined by a second space filling curve (6).

12. Method (100) of any of the preceding claims, wherein a width (7) of each step (4) of the space filling curve (2) is adaptable.

13. A system comprising one or more processors and one or more storage devices,
wherein the system is configured to perform the computer-implemented method (100) of any one of claims 1-12.

14. A computer program product for loading into a memory of a computer, comprising instructions, that, when executed by a processor of the computer, cause the computer to execute a computer-implemented method (100) of any of claims 1-12.

15. A computer program product comprising a trained machine learning module obtainable by the computer-implemented method (100) of any of claims 1-12.

## Amended claims

### Amended claims in accordance with Rule 137(2) EPC.

1. A computer-implemented method (100) for processing a multi-dimensional spatial data representation (1) which is a two-dimensional image for creating a three-dimensional virtual space,
the method (100) comprising:
- Providing the multi-dimensional spatial data representation (1),
- Applying a space filling curve (2) on the data representation (1) to process (8) a subsection (3) of the data representation (1) in discrete steps (4) along the space filling curve (2)
- wherein during the processing (8) of the subsection (3) of the data representation (1) at least one object is placed on the subsection (3).

2. Method (100) of claim 1, wherein during the processing (8) of the subsection (3) of the data representation (1) an analysis of the content of the subsection (3) is executed.

3. Method (100) of any of the preceding claims, wherein at each step (4), processing (8) the subsection (3) of the data representation (1) is dependent on the respective position (11) within the data representation (1) and the space filling curve (2).

4. Method (100) of any of the preceding claims, wherein at each step (4) a probability value (9) for processing the subsection (3) of the data representation (1) is determined and the processing action (10) depends on said probability value (9).

5. Method (100) of any of the preceding claims, wherein the density of objects or content in a position or a subsection (3) of the multi-dimensional spatial data representation (1) is used as an input value (12) or as input values (12) to process (8) the subsection (3) of the data representation (1).

6. Method (100) of any of the preceding claims, wherein the presence or absence of a an object or content in a position (11) or subsection (3) of the multi-dimensional spatial data representation (1) is used as an input value (12) or as input values (12) to process (8) the multi-dimensional spatial data representation (1).

7. Method (100) of any of the preceding claims, wherein a distance to a content of the multi-dimensional spatial data representation (1) or a distance between objects on the multi-dimensional spatial data representation (1) or the space filling curve (2) is used as an input value (12) or as input values (12) to process (8) the multi-dimensional spatial data representation (1).

8. Method (100) of any of the preceding claims, wherein the content of the multi-dimensional spatial data representation (1) in the subsection (3) is analysed before any object is placed on the multi-dimensional spatial data representation (1), wherein the content of the multi-dimensional spatial data representation (1) in a position (11) or in adjacent positions is used as an input value (12) or as input values (12) to determine the probability value (9) for placing an object on the spatial data representation (1).

9. Method (100) of any of the preceding claims, wherein coherence requirements for objects or content of the multi-dimensional spatial data representation (1) are predefined, wherein a coherence test (13) is carried out to verify compliance with the coherence requirements, in which the content of the multi-dimensional spatial data representation (1) in a position (11) or in adjacent positions is analysed for landmarks, wherein in the case of the presence of a landmark in said position (11) and/or in an adjacent position, a check is performed as to whether an object placement or a content alteration may be executed on the position (11) of said landmark or on a position in the vicinity of said landmark.

10. Method (100) of any of the preceding claims, wherein different object types are placed on the multi-dimensional spatial data representation (1), wherein for each object type an individual probability value (9) for placing an object of said object type in a position (11) on the multi-dimensional spatial data representation (1) is determined.

11. Method (100) of any of the preceding claims, wherein before processing (8) the multi-dimensional spatial data representation (1), the multi-dimensional spatial data representation (1) is divided into a number of segments (5), wherein the processing (8) in one segment (5) is completed before a processing (8) of the multi-dimensional spatial data representation (1) in another segment (5) is started.

12. Method (100) of any of the preceding claims, wherein a width (7) of each step (4) of the space filling curve (2) is adaptable.

13. A system comprising one or more processors and one or more storage devices, wherein the system is configured to perform the computer-implemented method (100) of any one of claims 1-12.

14. A computer program product for loading into a memory of a computer, comprising instructions, that, when executed by a processor of the computer, cause the computer to execute a computer-implemented method (100) of any of claims 1-12.

15. A computer program product comprising a trained machine learning module obtainable by the computer-implemented method (100) of any of claims 1-12.
